# EUROPEAN PATENT SPECIFICATION

(11) **EP 4 641 431 B1**
(45) Date of publication and mention of the grant of the patent: **29.07.2026**
(21) Application number: 24171818.8
(22) Date of filing: 23.04.2024
(51) Int. Cl.: G06F 30/20

(54) **METHOD FOR ESTIMATING THE OUTPUT FLOWS OF SHREDDED PARTICLES OF A PRODUCT AFTER A SIMULATED SHREDDING PROCESS**
VERFAHREN ZUR SCHÄTZUNG DER AUSGABESTRÖME VON ZERKLEINERTEN PARTIKELN EINES PRODUKTS NACH EINEM SIMULIERTEN ZERKLEINERUNGSVERFAHREN
PROCÉDÉ D'ESTIMATION DES FLUX DE SORTIE DE PARTICULES DÉCHIQUETÉES D'UN PRODUIT APRÈS UN PROCESSUS DE BROYAGE SIMULÉ

(43) Date of publication of application: 29.10.2025
(73) Proprietor: Siemens Industry Software NV, 3001 Leuven (BE)
(72) Inventor: Balakirev, Alexander, 1500-244 Lisbon (PT)
(74) Representative: Siemens Patent Attorneys

(56) References cited:
- CASTRO M B ET AL: "A simulation model of the comminution-liberation of recycling streams", INTERNATIONAL JOURNAL OF MINERAL PROCESSING, ELSEVIER SCIENCE PUBLISHERS, AMSTERDAM, NL, vol. 75, no. 3-4, 7 February 2005 (2005-02-07), pages 255 - 281, XP027606008, ISSN: 0301-7516, [retrieved on 20050207]
- VAN SCHAIK A ET AL: "Dynamic modelling of E-waste recycling system performance based on product design", MINERALS ENGINEERING, ELSEVIER, AMSTERDAM, NL, vol. 23, no. 3, 1 February 2010 (2010-02-01), pages 192 - 210, XP026896404, ISSN: 0892-6875, [retrieved on 20091014], DOI: 10.1016/J.MINENG.2009.09.004
- HEIBECK MAGDALENA ET AL: "Simulating the shredding process of multi-material structures for recyclability assessment", MATERIALS & DESIGN, ELSEVIER, AMSTERDAM, NL, vol. 232, 17 July 2023 (2023-07-17), XP087383475, ISSN: 0264-1275, [retrieved on 20230717], DOI: 10.1016/J.MATDES.2023.112167

## Description

The present invention relates to a method for estimating the output flows of shredded particles of a product after a simulated shredding process.

A sustainable future requires responsible handling of the material and energy resources, e.g., through circular economy practices like repairing and recycling, as recently reinforced by Europeans circular economy action plan. However, modern sustainability-enabling products (e.g., wind turbines, lightweight aircrafts, electric vehicles) are evolving towards increasingly complex multi-material structures (MMS).

At the end of life during the recycling phase, a particular observation of the character of the joints between materials has to be undertaken. Thus, in the recycling processes, the joints between materials must be effectively broken to liberate the different materials from each other, which supports efficient sorting and separation for high material-specific recycling rates. Liberated materials are essential for efficient recycling and consequently minimizing the use of primary raw materials.

Typical recycling scenarios for MMS start with optional manual dismantling steps and almost always include shredding as the first mechanical treatment. The term shredding is used here to describe all kinds of size reduction processes through mechanical treatment in recycling. Recycling scenarios typically include multiple shredding stages for coarse to fine feed sizes in combination with several sorting and separation processes and, finally, material-specific refinement steps like metallurgical or chemical recovery.

The two main objectives of shredding are the liberation of joined materials and size reduction. They are essential preconditions for downstream separation processes. These objectives come at the cost of investments in shredding equipment and operational expenses for its energy consumption and maintenance. In the prior art, the shredding performance is assessed based on three metrics: liberation degree, energy consumption, and fragmentation (including the number and size of fragments). The optimal shredding performance is characterized by a high liberation degree coupled with low energy consumption, while the importance of fragmentation is considered as a secondary feature.

Traditionally, it is the recyclers responsibility to achieve good shredding performance. Depending on the multi-material structures to process, adequate equipment is chosen (e.g., hammer mill, rotary shredder, cutting mill with/without discharge grid) and process parameters are optimized. However, according the Extended Producer Responsibility in Europe, not only recyclers but also product designers, design engineers, and manufacturers bear responsibility for good recyclability. Their design decisions (e.g., choice of materials, joining techniques, and geometries) influence the behavior of a product'liberation behavior and consequently its recyclability. To enable recycling-oriented decisions within the scope of eco-design, designers need tools to assess the influence of their decisions on MMS recyclability. A model that can predict shredding performance is missing but could be a crucial link between product design and the recycling chain for the future.

Thus, it is still a big problem for the designers product design to adequately simulate the product recycling process to estimate the quantity of metals and other materials which potentially can be recovered from the end-of-life products (EOL). In this context, the most important and least developed step in recycling is comminution (size reduction) of the feed stock (end-of-life products) typically done by shredding.

The well-known methods used in mineral processing to predict liberation of ores despite some similarities cannot be directly applied to end-of-life products such as WEEE (Waste electrical and electronic Equipment) or ELVs (End-of-life Vehicles) due to number of reasons (but mainly because of joints between parts) as multiply explained in literature.

Current theoretical solutions of this problem propose matrix-based numerical methods describing the input feed and outcome in terms of material or liberation classes to calculate shredded outcome and recyclability rates of an EOL product. Significant limitation of such models is that they all lack clear methodology and formulas to define matrices being used for the calculations. The mentioned methods rather rely on heuristic (or fuzzy) rules and only linked to available experience and observations in shredding trials. A comprehensive review of the available models concludes that none of the available models can properly describe the shredded outcome.

A commercial practical solution of the problem exists: Outotec HSC Sim, a 1D simulation package provides basic blocks to build a recycling model. The shredding process here is also described on the matrix approach mentioned above. As for today, it is unknown if produced results are reliable and properly validated to be used in industry. Also, all the available solutions do not directly relate on the product design data, completely abstracting it in the form of various matrices without any way for a designer to link input data and obtained results back to the design product data.

It is therefore the objective of the present invention to provide a method for estimating the output flows of shredded particles of a product after a simulated shredding process that allows to benefit from product design data and deliver a result quality being reliable in terms of the real shredded material flows in real shredding operations.

This objective is achieved according to the present invention by the measures taken in accordance with the independent claims. Further advantageous embodiments are proposed by the dependent claims.

In particular, the present invention discloses a method for estimating the output flows of shredded particles of a product after a simulated shredding process; said method comprising the steps of:
a) using an input CAD model of the product to define a mesh-based or voxel-based product representation; said product representation comprising a set of parts and connections between the parts for parts which are jointly connected;
b) determining a range of the particle size of the shredded particles thereby reflecting the grate of a shredding machine;
c) determining a probability for a joint survival for a joint of two or more parts of the product after the shredding process; and
d) running a simulation of the shredding process for the mesh- or voxel-based product representation thereby determining the flow of shredded particles that are fully liberated and the flow of shredded particles that are non-liberated in the dependency of the determined probability for the joint survival.

This method enables the simulation of the shredding process by a transfer of the input CAD model of the product into the product representation comprising the joints of parts of the product. With the help of the determined probability of joints survival during the shredding process, a clear determination on the flows of liberated and non-liberated particles can be made allowing to further evaluate the following recycling options.

Further information for following recycling options can be achieved when the product representation may comprise for each part a material information and optionally further information of connections to other parts, if any.

In a realistic approach, the probability of the joint survival can be determined at a higher level for stronger joints, such as joints generated by glueing, welding, soldering or bolting, and at a lower level for weaker joints, such as joints generated by snaps, shape or slots.

One preferred embodiment for the execution of the simulation of the shredding process can be achieved when the simulation of the shredding process is executed as a random process of splitting the mesh-based or voxel-based product representation into a plurality of fragments either being fully liberated or being non-liberated according to the determined probability of joint survival.

In order to treat those section of splitting the mesh- or voxel-based product representation for sections with joints in an advantageous way, a preferred embodiment executes a split operation for the product representation thereby splitting the product representation into a set of randomly inclined planes, wherein the generated particles after the split operation are compared to the predefined size range; said split operation is repeated until at least a majority of the generated particles fit into the predefined size range, and wherein each time a plane crosses a connection/joint defined in the product representation, a dice function defines whether the connection/joint breaks apart thus generation new liberated or non-liberated fragments depending on the determined probability of joint survival for this specific connection/joint.

A further preferred embodiment of the present invention can be achieved when the simulation of the shredding process is executed by:
i) defining for each particle a pilot mesh/voxel element being randomly selected in the vicinity of a joint;
ii) adding surrounding elements to these pilot mesh/voxel elements thus making up the particles;
iii) selecting the next surrounding element randomly across the neighbors of the particles, preferably out of four adjacent surrounding elements;
iv) stopping the adding when a bounding box of the particle reaches a limit defined randomly from the determined range of particle size;
v) applying a dice function representing the probability of joint survival on those particles which cross a joint thereby defining a number of liberated particles where the dice function delivers a break of the joint and a number of non-liberated particle where the dice function delivers a survival of the joint.

Further, once all connections in the product representation have been processed, all remaining particles can be considered as fully liberated particles of one material thereby providing a clear statement for the possible following recycling options.

Preferred embodiments of the present invention will be described in more detail with reference to the attached drawings (like features have like reference numbers) which depict in:
- Figure 1: schematically the general principle of a method for estimating the output flows of shredded particles of a product after a simulated shredding process;
- Figure 2: schematically a first workflow of a simulated shredding process;
- Figure 3: schematically a second workflow of a simulated shredding process; and
- Figure 4: an example of Pilot Element Growth technique tested on a sand-box model of two blocks glued together with a predefined survival probability of the joint.

The present invention discloses a method for estimating the output flows of shredded particles of a product after a simulated shredding process. It is a substantial feature of the present invention that the CAD model of the product is used as input data for the simulation of the shredding process. The input CAD model of the product typically comprises several parts making-up an assembly (the product is assembled by these parts). Each part is made from one material (e.g. metal, metal oxide, polymers, plastic, composite material, anorganic and/or organic compound and mixtures thereof). The parts can be connected to each other by different types of joints, e.g., glue, welding, bolting, snap, and so on.

For the simulation of the shredding process, the present invention uses a mesh-based or voxel-based (if voxels are used) approach to generate a product representation (being inspired by well-known Finite Element Method or FEM) that form the basis to simulate the shredding process and estimate the output shredded material flows. However, opposite to traditional structural FEM no physical-based equations will be solved to predict the results and the similarity to FEM is only in using the mesh as a set of elements and connections between them to represent the product design data, deducted from a CAD model of the product. This mesh is created for each part and may include necessary attributes, such as material name or information of the connections to other parts.

The essential feature of the method according to the present invention is that joints between parts are explicitly represented in the mesh and contribute to the output material flows forming multi-material particles (thus reducing the material liberation and recycling rates).

The shredding process itself then is described as a random process of separating (splitting) the input mesh into several mesh groups, called particles with certain meaningful parameters to be explained further. Each particle represents a fragment of the input feed product after shredding like if it would happen in a real shredding machine. Due to the present joints, particles can be fully liberated (consisting of one material/composition only) and non-liberated (multi-material/multi-composition).

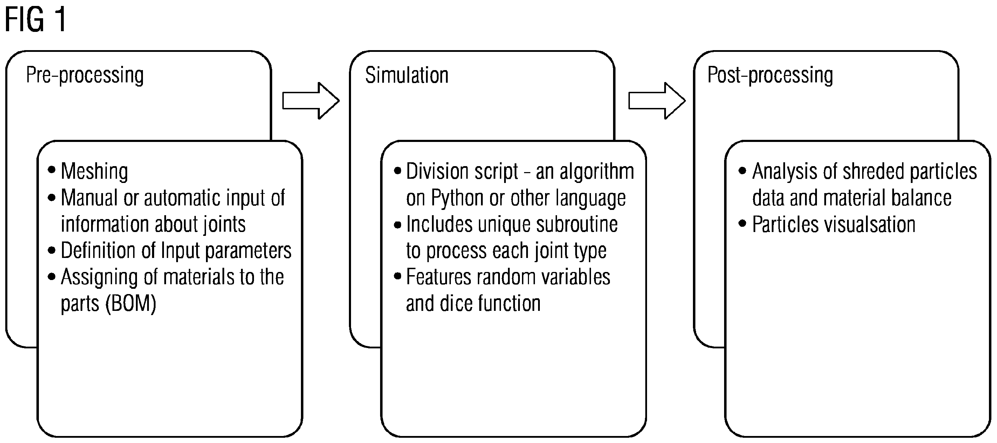

A general flowsheet of the method according to the present invention is shown in Figure 1. The following is considered as an input for the simulation process (only basic parameters are listed here):
a) Mesh: A list of node numbers with coordinates and a list of element numbers with the nodes forming each element. The mesh preparation process is like classic FEM. However, due to the nature of the task, there is no need to follow the geometry precisely and hence, voxel-based mesh can be preferred as it is simpler to prepare.
b) Particle size range: It normally depends on the shredding machine grate. Typically, the range is given in a form of a range from a to b mm. The exact sizes of particles are random but they are normally distributed to be in the specified range.
c) Joint survival probability; This is a scalar parameter, unique for each joint or part describing how many of joints of such type will survive the shredding process. The survival probability is higher for stronger joints, like bolts, and lower for weak joints, such as snaps, shape joints and slots. Technically, the survival probability is an input to the dice function which can return true or false with the prescribed probability.
d) Part survival probability: This is a similar scalar parameter to the described that allows to control the probability of destruction of any part in the assembly. This parameter can be used for example to define fully indestructible parts which never break.

In the present simulation of the shredding process, two probabilistic algorithms are favored to generate the shredded particles.

The first algorithm is splitting the mesh by a set of randomly inclined planes. After each split the generated particles are compared with the predefined size range and the process repeats until all the particles fit to the determined size range. Each plane can split the joint only with the prescribed probability. Each time the plane crosses a joint, the aforementioned dice function defines if the joint breaks apart and new particles are generated. For example, if the survival probability is set to 90%, it means that averagely in nine out of ten cases a plane will not break the joint apart.

The second algorithm starts by forming each particle around a pilot mesh element, randomly selected in the vicinity of a joint. Surrounding elements are added to this pilot mesh element making-up a particle eventually. The next element to be added is selected randomly across the neighbors of the particles at the current step (e.g. initially out of four adjacent elements). The process stops when the bounding box reaches the limit defined randomly from the size range. Like the previous algorithm, the dice function defines whether the joint breaks or not. If the joint survives, it means a multi-material particle will be generated, otherwise several liberated particles (of one material) will be formed. When all the joints are processed that way, the remaining part of the product is considered a material that is fully liberated. Each joint type has own specifics and can be coded as a separate subroutine. The following considerations can help to resemble real fracture mechanics in the simulation algorithm:
a) Number of pilot mesh elements (or particles) should relate to the volume of the joint and the shredder grate area.
b) Particle boundaries should be in areas with low strength and/or stress concentrators (section planes or pilot elements to be located correspondingly).
c) Simultaneous creation of several particles.
d) Part survival probability can vary for each element (voxel) depending on different factors, such as material strength and distance to a joint or a stress concentrator.

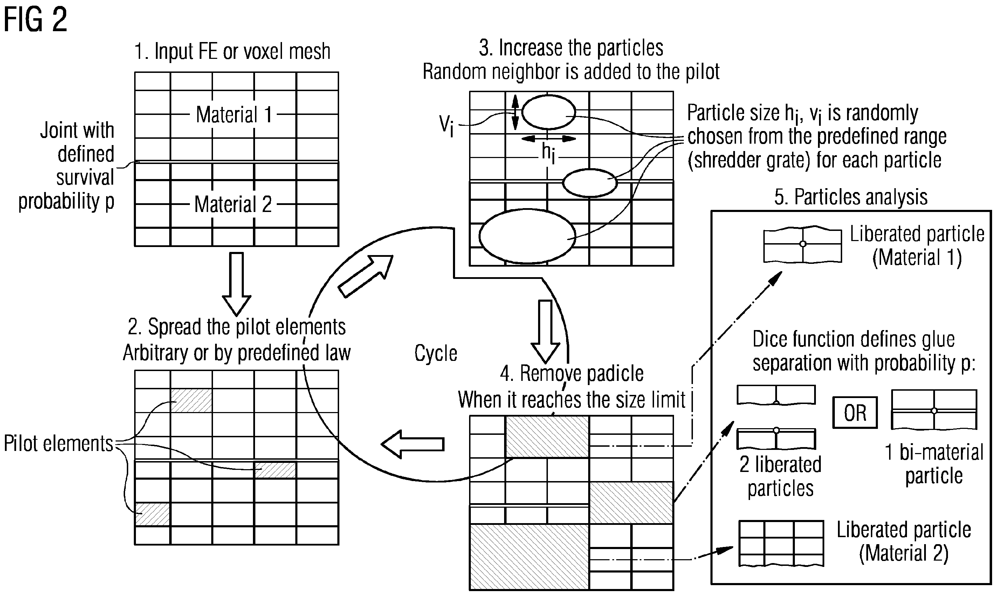

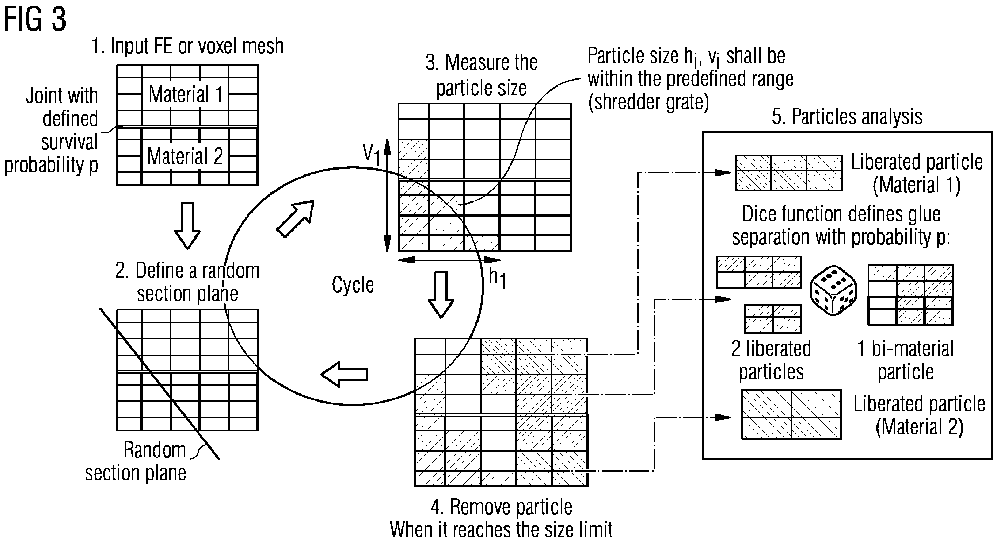

Two typical schematic loops to generates the shredded particles in case of two parts joined together are shown in Figures 2 and 3 resp. The main differences and corresponding advantages of the present invention as compared to the prior art are as follows:
The approach directly utilizes the 3D CAD models of the product to be recycled; hence each feature of the design can be considered and contribute to the outcome material flow. Therefore, no simplification or abstraction of the design (besides meshing or voxelization) of the product is required. Nearly no limit is set on the quantity of parts and different materials in the output flows of the shredding process. The present method can be easily integrated as a tool into existing CAx products like NX or presented as a stand-alone application.

The shredding results can be visualized up to each particle to verify the results and tune the model (e.g., in comparison to test trials). The method requires relatively low computational resources because it does not utilize comprehensive physical models and equations. The division script performing the particle's generation can be scaled-up to different joints or connection types by adding corresponding subroutines. The presence of random parameters in the algorithm allows to capture stochastic nature of shredding and employ statistical methods like Monte Carlo.

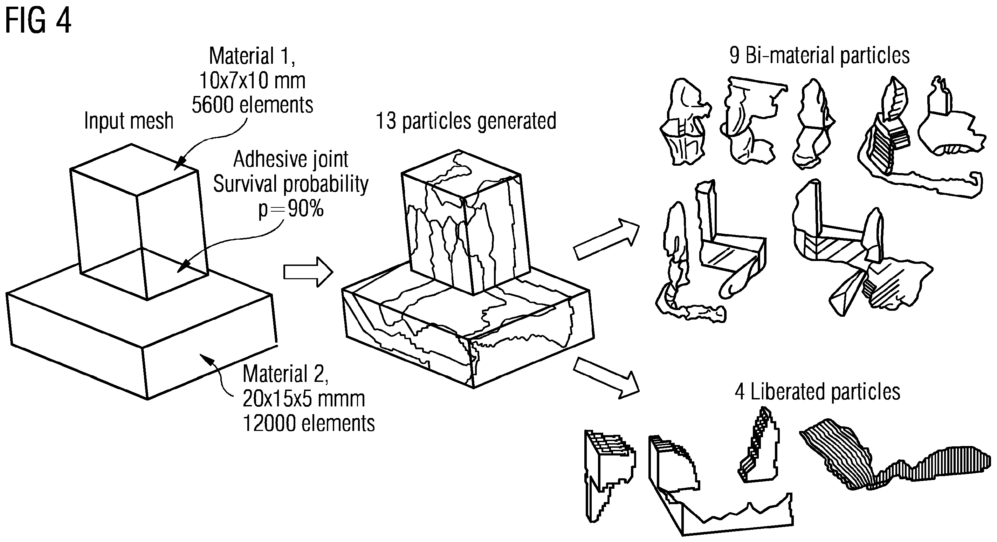

Figure 4 shows an example of Pilot Element Growth technique tested on a sand-box model of two blocks glued together with a predefined survival probability of the joint. As the results, one can see both liberated and multi-material particles.

## Claims

1. A method for estimating the output flows of shredded particles of a product after a simulated shredding process; said method comprising the steps of:
a) using an input CAD model of the product to define a mesh-based or voxel-based product representation; said product representation comprising a set of parts and connections between the parts for parts which are jointly connected;
b) determining a range of the particle size of the shredded particles thereby reflecting the grate of a shredding machine;
c) determining a probability for a joint survival for a joint of two or more parts of the product after the shredding process; and
d) running a simulation of the shredding process for the mesh- or voxel based product representation thereby determining the flow of shredded particles that are fully liberated and the flow of shredded particles that are non-liberated in the dependency of the determined probability for the joint survival.

2. The method according to claim 1, wherein
the product representation comprises for each part a material information and optionally further information of connections to other parts, if any.

3. The method according to any of the preceding claims, wherein the probability of joint survival is determined at a higher level for stronger joints and at a lower level for weaker joints.

4. The method according to any of the preceding claims, wherein the simulation of the shredding process is executed as a random process of splitting the mesh-based or voxel-based product representation into a plurality of fragments either being fully liberated or being non-liberated according to the determined probability of joint survival.

5. The method according to claim 4, wherein
for the product representation a split operation is executed thereby splitting the product representation into a set of randomly inclined planes, wherein the generated particles after the split operation are compared to the predefined size range; said split operation is repeated until at least a majority of the generated particles fit into the predefined size range, and wherein each time a plane crosses a connection defined in the product representation, a dice function defines whether the connection breaks apart thus generating new fragments depending on the determined probability of joint survival for this specific connection.

6. The method according to claim 4, wherein
the simulation of the shredding process is executed by:
i) defining for each particle a pilot mesh/voxel element being randomly selected in the vicinity of a joint;
ii) adding surrounding elements to these pilot mesh/voxel elements thus making up the particles;
iii) selecting the next surrounding element randomly across the neighbors of the particles, preferably out of four adjacent surrounding elements;
iv) stopping the adding when a bounding box of the particle reaches a limit defined randomly from the determined range of particle size;
v) applying a dice function representing the probability of joint survival on those particles which cross a joint thereby defining a number of liberated particles where the dice function delivers a break of the joint and a number of non-liberated particle where the dice function delivers a survival of the joint.

7. The method according to claim 6 wherein once all connections in the product representation have been processed, all remaining particles are considered as fully liberated particles of one material.

## Patentansprüche

1. Verfahren zum Schätzen der Austragsströme geschredderter Partikel von einem Produkt nach einem simulierten Schredderprozess, wobei das Verfahren folgende Schritte umfasst:
a) Benutzen eines eingegebenen CAD-Modells von dem Produkt zum Definieren einer netz- oder voxelbasierten Produktdarstellung, wobei die Produktdarstellung einen Satz Teile und für miteinander verbundene Teile Verbindungsstellen zwischen den Teilen umfasst,
b) Bestimmen eines Bereichs für die Partikelgröße der geschredderten Partikel, der somit das Gitter einer Schreddermaschine repräsentiert,
c) Bestimmen einer Wahrscheinlichkeit des Weiterbestehens einer Verbindung aus zwei oder mehr Teilen des Produkts nach dem Schredderprozess und
d) Ausführen einer Simulation des Schredderprozesses für die netz- oder voxelbasierte Produktdarstellung, wodurch in Abhängigkeit von der bestimmten Wahrscheinlichkeit des Weiterbestehens einer Verbindung der Strom geschredderter Partikel, die komplett aufgeschlossen werden, und der Strom geschredderter Partikel, die nicht aufgeschlossen werden, bestimmt wird.

2. Verfahren nach Anspruch 1, wobei
die Produktdarstellung für jeden Teil eine Materialinformation und wahlweise weitere Informationen zu eventuell bestehenden Verbindungsstellen mit anderen Teilen umfasst.

3. Verfahren nach einem der vorhergehenden Ansprüche, wobei davon ausgegangen wird, dass die Wahrscheinlichkeit des Weiterbestehens einer Verbindung bei stärkeren Verbindungen größer und bei schwächeren Verbindungen geringer ist.

4. Verfahren nach einem der vorhergehenden Ansprüche, wobei die Simulation des Schredderprozesses als regelloser Prozess ausgeführt wird, bei dem die netz- oder voxelbasierte Produktdarstellung in eine Vielzahl von Fragmenten zerteilt wird, die der bestimmten Wahrscheinlichkeit des Weiterbestehens einer Verbindung entsprechend entweder komplett oder nicht aufgeschlossen werden.

5. Verfahren nach Anspruch 4, wobei
für die Produktdarstellung eine Zerteiloperation durchgeführt wird, wodurch die Produktdarstellung in einen Satz regellos geneigter Ebenen zerteilt wird, wobei die generierten Partikel nach der Zerteiloperation mit dem vorgegebenen Größenbereich verglichen werden; die Zerteiloperation wird wiederholt, bis zumindest die meisten der generierten Partikel in den vorgegebenen Größenbereich passen, und wobei jedes Mal, wenn eine Ebene eine in der Produktdarstellung definierte Verbindungsstelle kreuzt, eine Würfel-Funktion definiert, ob sich die Verbindungsstelle auflöst und somit der bestimmten Wahrscheinlichkeit des Weiterbestehens einer Verbindung für diese spezielle Verbindungsstelle entsprechend neue Fragmente generiert werden.

6. Verfahren nach Anspruch 4, wobei
die Simulation des Schredderprozesses ausgeführt wird durch:
i) Definieren eines Pilot-Netz/Voxel-Elements für jedes Partikel, das in der Nähe einer Verbindung willkürlich ausgewählt wird,
ii) Hinzufügen von umgebenden Elementen zu diesen Pilot-Netz/Voxel-Elementen und so Erstellen der Partikel,
iii) willkürliches Auswählen des nächsten umgebenden Elements unter den Nachbarn der Partikel, vorzugsweise unter vier benachbarten umgebenden Elementen,
iv) Beenden des Hinzufügens, wenn ein Begrenzungsrahmen für das Partikel eine Grenze erreicht, die anhand des bestimmten Partikelgrößenbereichs willkürlich definiert ist,
v) Anwenden einer Würfel-Funktion, die die Wahrscheinlichkeit des Weiterbestehens einer Verbindung bei den Partikeln darstellt, die eine Verbindung kreuzen, wodurch eine Anzahl aufgeschlossener Partikel definiert wird, bei denen die Würfel-Funktion eine Auflösung der Verbindung liefert, und eine Anzahl nicht aufgeschlossener Partikel, bei denen die Würfel-Funktion ein Weiterbestehen der Verbindung liefert.

7. Verfahren nach Anspruch 6, wobei, wenn alle Verbindungsstellen in der Produktdarstellung verarbeitet worden sind, sämtliche verbleibenden Partikel als komplett aufgeschlossene Partikel aus einem Material betrachtet werden.

## Revendications

1. Procédé d'estimation des flux de sortie de particules déchiquetées d'un produit après un processus de déchiquetage simulé ; ledit procédé comprenant les étapes suivantes :
a) l'utilisation d'un modèle CAO d'entrée du produit pour définir une représentation de produit à base de maillage ou à base de voxels ; ladite représentation de produit comprenant un ensemble de parties et de liaisons entre les parties pour des parties qui sont reliées ensemble ;
b) la détermination d'une plage de la taille de particule des particules déchiquetées, reflétant ainsi la grille d'une machine de déchiquetage ;
c) la détermination d'une probabilité de survie d'une jonction pour une jonction de deux parties ou plus du produit après le processus de déchiquetage ; et
d) l'exécution d'une simulation du processus de déchiquetage pour la représentation de produit à base de maillage ou à base de voxels, déterminant ainsi le flux de particules déchiquetées qui sont complètement libérées et le flux de particules déchiquetées qui ne sont pas libérées en fonction de la probabilité de survie de jonctions déterminée.

2. Procédé selon la revendication 1, dans lequel
la représentation de produit comprend, pour chaque partie, des informations de matériau et optionnellement d'autres informations de liaisons à d'autres parties, s'il y en a.

3. Procédé selon l'une des revendications précédentes, dans lequel la probabilité de survie de jonctions est déterminée à un niveau supérieur pour des jonctions plus fortes et à un niveau inférieur pour des jonctions plus faibles.

4. Procédé selon l'une des revendications précédentes, dans lequel la simulation du processus de déchiquetage est exécutée comme un processus aléatoire de division de la représentation de produit à base de maillage ou à base de voxels en une pluralité de fragments soit complètement libérés soit non libérés en fonction de la probabilité de survie de jonctions déterminée.

5. Procédé selon la revendication 4, dans lequel
pour la représentation de produit, une opération de division est exécutée, divisant ainsi la représentation de produit en un ensemble de plans inclinés de manière aléatoire, dans lequel les particules générées après l'opération de division sont comparées à la plage de taille prédéfinie ; ladite opération de division est répétée jusqu'à ce qu'au moins une majorité des particules générées correspond à la plage de taille prédéfinie, et dans lequel chaque fois qu'un plan intersecte une liaison définie dans la représentation de produit, une fonction de dés définit si la liaison se rompt, générant ainsi de nouveaux fragments, en fonction de la probabilité de survie de jonctions déterminée pour cette liaison spécifique.

6. Procédé selon la revendication 4, dans lequel la simulation du processus de déchiquetage est exécutée en :
i) définissant pour chaque particule un élément de maillage/voxel pilote sélectionné de manière aléatoire au voisinage d'une jonction ;
ii) ajoutant des éléments environnants à ces éléments de maillage/voxels pilotes, constituant ainsi les particules ;
iii) sélectionnant l'élément environnant suivant de manière aléatoire au travers les voisins des particules, de préférence parmi quatre éléments environnants adjacents ;
iv) arrêtant l'ajout lorsqu'une boîte de délimitation de la particule atteint une limite définie de manière aléatoire à partir de la plage de taille de particule déterminée ;
v) appliquant une fonction de dés représentant la probabilité de survie de jonctions sur ces particules qui intersectent une jonction, définissant ainsi un nombre de particules libérées où la fonction de dés délivre en sortie une rupture de la jonction et un nombre de particules non libérées où la fonction de dés délivre en sortie une survie de la jonction.

7. Procédé selon la revendication 6, dans lequel, une fois que toutes les liaisons dans la représentation de produit ont été traitées, toutes les particules restantes sont considérées comme des particules complètement libérées d'un matériau.
